# FASCICULE DE BREVET EUROPEEN

(11) **EP 3 571 109 B1**
(45) Date de publication et mention de la délivrance du brevet: **18.05.2022**
(21) Numéro de dépôt: 18701448.5
(22) Date de dépôt: 22.01.2018
(51) Int. Cl.: B62D 1/06, B62D 1/04

(54) **VOLANT DE VEHICULE**
FAHRZEUGLENKRAD
VEHICLE STEERING WHEEL

(30) Priorité: 23.01.2017 FR 1750539
(43) Date de publication de la demande: 27.11.2019
(73) Titulaire: Autoliv Development AB, 447 83 Vårgårda (SE)
(72) Inventeur: JACQ, Gweltaz, 86240 Fontaine le Comte (FR); MATRAT, Thierry, 86190 Vouille (FR); BOITTIAUX, Jonathan, 86000 Poitiers (FR); LEMEVEL, Vincent, 92140 Clamart (FR); SOURISSEAU, David, 33570 Montagne (FR)
(74) Mandataire: Schön, Thilo
(86) Numéro de dépôt international: PCT/EP2018/051439
(87) Numéro de publication internationale: WO 2018/134400

(56) Documents cités:
- WO-A2-2005/023591
- WO-A2-2016/071002
- DE-A1- 10 155 859
- DE-U1- 29 803 133

## Description

La présente invention concerne de manière générale un volant destiné à être monté sur un véhicule automobile.

Il est connu dans l'art antérieur des volants de véhicule équipés de capteurs pour savoir si l'utilisateur touche la jante, et à quel endroit.

Le document DE102005013202 A1 décrit par exemple un volant comprenant une armature, un film piézoélectrique qui pourrait aussi être un capteur capacitif recouvert par une pièce décorative. Cependant, de tels capteurs sont sensibles aux variations de la grandeur électrique qu'ils mesurent, et ce document ne donne aucune solution pour améliorer la mesure si l'occupant peut toucher une pièce conductrice de l'électricité par exemple. Le préambule de la revendication 1 est basé sur ce document DE102005013202 A1.

Le document WO 2016/071002 A2 décrit un volant avec un capteur capacitif, qui est couvert d'une enveloppe.

Le document WO 2005/023591 A2 décrit un volant comprenant une armature et un élément décoratif, qui est fixé à cette armature.

Un but de la présente invention est de répondre aux inconvénients des documents de l'art antérieur mentionnés ci-dessus et en particulier, tout d'abord, de proposer un volant de véhicule permettant de détecter de manière fiable un contact ou une position sur le volant d'un membre de l'utilisateur.

Pour cela un premier aspect de l'invention concerne un volant de véhicule, comprenant :
- une armature réalisée en matériau conducteur de l'électricité,
- au moins un capteur de position et/ou de contact d'un membre de l'utilisateur sur le volant,
- au moins une pièce d'ancrage agencée pour procurer aux moyens de fixation un ancrage sur l'armature,
caractérisé en ce que la pièce d'ancrage est réalisée en matière isolante de l'électricité, de sorte à isoler électriquement les moyens de fixation de l'armature.

Le volant selon l'invention comprend donc un capteur de présence et/ou contact pour détecter une présence et/ou contact et/ou position d'un membre de l'utilisateur sur le volant. Cependant, un tel capteur fonctionne typiquement en mesurant une variation d'une grandeur électrique (résistance, capacité, impédance...), et la présence du matériau conducteur de la pièce décorative peut perturber la mesure si l'utilisateur touche ce matériau conducteur de la pièce décorative, ou même si un de ses membres en est à proximité. Afin d'éviter ces perturbations, l'invention propose un volant qui comprend une pièce d'ancrage qui isole électriquement ce matériau conducteur de la pièce décorative de l'armature conductrice du volant, qui est reliée à la masse du véhicule. Il est donc possible de fixer la pièce décorative sur l'armature, par l'intermédiaire de la pièce d'ancrage, qui joue aussi le rôle d'isolant électrique entre la pièce décorative et l'armature.

Avantageusement, les moyens de fixation comprennent une vis de fixation et la pièce d'ancrage est agencée entre la vis de fixation et l'armature. Une vis est typiquement en métal, mais la pièce d'ancrage isole cette vis, et donc le matériau conducteur de la pièce décorative, de l'armature.

Avantageusement, la pièce d'ancrage est un insert de vissage agencé pour s'accoupler avec les moyens de fixation. La pièce d'ancrage cumule les fonctions d'isolant et de fixation de la pièce décorative.

Avantageusement, la pièce d'ancrage est fixée directement sur l'armature. On peut la visser, la clipser, la centrer sur l'armature.

Avantageusement, le matériau conducteur de la pièce décorative forme une surface externe du volant. Autrement dit, le matériau conducteur de la pièce décorative peut être touché ou au moins être très proche des mains de l'utilisateur, qui sont aussi, au même moment, au contact de la jante, et donc détectable par le capteur de position et/ou de contact sur le volant. L'invention évite donc une mise à la masse de l'utilisateur par l'intermédiaire de la pièce décorative. A tout le moins, l'invention évite de perturber la grandeur physique (résistance, capacité, impédance...) en isolant l'utilisateur (qui touche ou est à proximité de la pièce décorative tout en touchant ou étant à proximité de la jante du volant et son capteur) de l'armature (par le biais de la pièce d'ancrage qui est isolante).

En tout état de cause, le matériau conducteur de la pièce décorative n'est pas recouvert par un vernis isolant ou un film plastique : il est à nu. Le matériau conducteur de la pièce décorative peut être un revêtement (du chromage), ou former la pièce décorative elle-même (aluminium massif, magnésium ou acier inoxydable). Cela peut être également une pièce décorative en fibres de carbone.

Avantageusement, la pièce décorative est adjacente au capteur de position. En d'autres termes, la pièce décorative est à une distance du capteur de position, de sorte que l'utilisateur peut toucher simultanément avec le même membre (sa main) la pièce décorative, et la zone où est le capteur de position / contact.

Avantageusement, le volant de véhicule comprend un moussage qui recouvre au moins partiellement la pièce d'ancrage. Le moussage, tel que du polyuréthane, permet de fixer la pièce d'ancrage sur l'armature.

Avantageusement, la pièce d'ancrage s'accouple avec les moyens de fixation. On peut envisager du vissage, du clipsage...

Avantageusement, la pièce d'ancrage est surmoulée sur l'armature. La pièce d'ancrage est donc directement fixée sur l'armature.

Avantageusement, la pièce d'ancrage est en matériau polymérique, tel que du polyamide, du polyéthylène, du polypropylène, du polycarbonate, du poly(méthacrylate de méthyle)... Le matériau pourra être ou pas chargé en fibres de verre.

Un deuxième aspect de l'invention concerne un véhicule automobile comportant un volant selon le premier aspect de l'invention.

D'autres caractéristiques et avantages de la présente invention apparaîtront plus clairement à la lecture de la description détaillée qui suit d'un mode de réalisation de l'invention donné à titre d'exemple nullement limitatif et illustré par le dessin annexé, dans lequel :

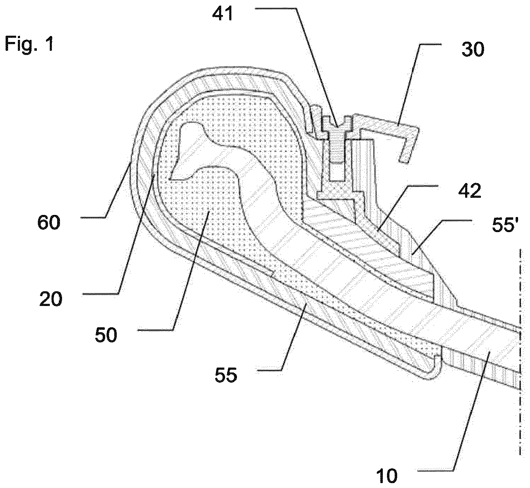

- la figure 1 représente une coupe d'un volant selon l'invention.

La figure 1 représente une coupe d'un volant au niveau d'une branche reliant un moyeu du volant à sa jante. Une armature 10, en matériau conducteur de l'électricité (du magnésium, de l'aluminium...) forme la structure porteuse du volant.

Au niveau de la jante, l'armature 10 supporte un premier matériau de moussage 50 (du polyuréthane par exemple), autour duquel est positionné un dispositif de détection, qui comprend un capteur de position et/ou de contact 20, lui-même recouvert d'un deuxième matériau de moussage 55 (du polyuréthane par exemple), enfin recouvert d'une peau 60.

Le capteur de position et/ou de contact 20 est typiquement un capteur capacitif, qui peut détecter une position ou la proximité d'un membre de l'utilisateur sur le volant. En effet, l'utilisateur, chargé en électricité peut faire varier la capacité électrique et ou la résistance d'un système, variations de capacité et ou de résistance qui peuvent être mesurées par le capteur de position et/ou de contact 20 lorsque l'utilisateur approche sa main par exemple, ce qui en permet la détection. En tout état de cause, le capteur de position et/ou de contact 20 détecte un changement d'une valeur d'une grandeur électrique, provoqué par l'approche et/ou le contact de la main de l'utilisateur sur le volant.

Au niveau de la branche, une pièce décorative 30 est fixée sur une pièce d'ancrage 42, elle-même partiellement surmoulée par le deuxième matériau de surmoulage 55. En conséquence, la pièce d'ancrage 42 est solidarisée à l'armature par le deuxième matériau de moussage 55 et un autre deuxième matériau de moussage 55'.

La fixation est réalisée par une vis 41 accouplée à la pièce d'ancrage 42 qui forme un insert de vissage, mais on peut envisager d'autres modes de fixation, tel que par exemple du clipsage.

Pour des raisons esthétiques, la pièce décorative 30 peut comprendre un revêtement métallique, ou même être réalisée en métal (aluminium, magnésium, acier inoxydable). En raison de la proximité de montage de la pièce décorative 30 avec la jante, il se peut que la main de l'utilisateur touche en même temps la pièce décorative et une zone de la jante sujette à la détection opérée par le capteur de position et/ou de contact 20.

Pour éviter que les caractéristiques électriques mesurées par le capteur de position et/ou de contact 20 soient perturbées par ce matériau conducteur de la pièce décorative, l'invention propose d'isoler cette dernière de l'armature 10.

A cet effet, il est prévu de réaliser la pièce d'ancrage 42 en matériau isolant de l'électricité, comme du plastique par exemple. En conséquence, la pièce décorative 30 et la vis de fixation 41 se trouvent isolées de la masse du véhicule, et même si la main de l'utilisateur est proche ou au contact de la pièce décorative 30, cela ne perturbera pas la détection de position et/ou de contact de manière significative.

On peut envisager de réaliser la pièce d'ancrage 42 en plastique, en polymère comme par exemple du polyamide, du polyéthylène, ou tout équivalent.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Volant de véhicule, comprenant :
- une armature (10) réalisée en matériau conducteur de l'électricité,
- au moins un capteur de position et/ou de contact (20) d'un membre de l'utilisateur sur le volant,
- au moins une pièce décorative (30),
- des moyens de fixation agencés pour maintenir la pièce décorative (30) sur le volant,
- au moins une pièce d'ancrage (42) agencée pour procurer aux moyens de fixation un ancrage sur l'armature (10),
**caractérisé en ce que**:
la pièce décorative comprend un matériau conducteur d'électricité, et
la pièce d'ancrage (42) est réalisée en matière isolante de l'électricité, de sorte à isoler électriquement les moyens de fixation de l'armature (10).

2. Volant de véhicule selon la revendication précédente, dans lequel les moyens de fixation comprennent une vis de fixation et dans lequel la pièce d'ancrage (42) est agencée entre la vis de fixation et l'armature (10).

3. Volant de véhicule selon l'une des revendications précédentes, dans lequel la pièce d'ancrage (42) est un insert de vissage agencé pour s'accoupler avec les moyens de fixation.

4. Volant de véhicule selon l'une des revendications précédentes, dans lequel la pièce d'ancrage (42) est fixée directement sur l'armature (10).

5. Volant de véhicule selon l'une des revendications précédentes, dans lequel le matériau conducteur de la pièce décorative (30) forme une surface externe du volant.

6. Volant de véhicule selon l'une des revendications précédentes, dans lequel la pièce décorative (30) est adjacente au capteur de position.

7. Volant de véhicule selon l'une des revendications précédentes, comprenant un moussage qui recouvre au moins partiellement la pièce d'ancrage (42).

8. Volant de véhicule selon l'une des revendications précédentes, dans lequel la pièce d'ancrage (42) s'accouple avec les moyens de fixation.

9. Volant de véhicule selon l'une des revendications précédentes, dans lequel la pièce d'ancrage (42) est surmoulée sur l'armature (10).

10. Véhicule automobile comportant un volant selon l'une des revendications précédentes.

## Patentansprüche

1. Fahrzeuglenkrad, das Folgendes umfasst:
- eine Armatur (10), die aus elektrisch leitfähigem Material gefertigt ist,
- wenigstens einen Positions- und/oder Kontaktsensor (20) für eine Gliedmaße des Benutzers an dem Lenkrad,
- wenigstens ein dekoratives Teil (30),
- Befestigungsmittel, die angeordnet sind, um das dekorative Teil (30) an dem Lenkrad zu halten,
- wenigstens ein Verankerungsteil (42), das angeordnet ist, um den Befestigungsmitteln eine Verankerung an der Armatur (10) zu verschaffen,
**dadurch gekennzeichnet, dass**:
das dekorative Teil ein elektrisch leitfähiges Material umfasst und
das Verankerungsteil (42) aus einem elektrisch isolierenden Material gefertigt ist, um die Befestigungsmittel von der Armatur (10) elektrisch zu isolieren.

2. Fahrzeuglenkrad nach dem vorhergehenden Anspruch, wobei die Befestigungsmittel eine Befestigungsschraube umfassen und wobei das Verankerungsteil (42) zwischen der Befestigungsschraube und der Armatur (10) angeordnet ist.

3. Fahrzeuglenkrad nach einem der vorhergehenden Ansprüche, wobei das Verankerungsteil (42) ein Schraubeinsatz ist, der angeordnet ist, um mit den Befestigungsmitteln zu koppeln.

4. Fahrzeuglenkrad nach einem der vorhergehenden Ansprüche, wobei das Verankerungsteil (42) direkt an der Armatur (10) befestigt ist.

5. Fahrzeuglenkrad nach einem der vorhergehenden Ansprüche, wobei das leitfähige Material des dekorativen Teils (30) eine Außenoberfläche des Lenkrads ausbildet.

6. Fahrzeuglenkrad nach einem der vorhergehenden Ansprüche, wobei das dekorative Teil (30) an den Positionssensor angrenzt.

7. Fahrzeuglenkrad nach einem der vorhergehenden Ansprüche, das eine Verschäumung umfasst, die das Verankerungsteil (42) wenigstens teilweise bedeckt.

8. Fahrzeuglenkrad nach einem der vorhergehenden Ansprüche, wobei das Verankerungsteil (42) mit den Befestigungsmitteln koppelt.

9. Fahrzeuglenkrad nach einem der vorhergehenden Ansprüche, wobei das Verankerungsteil (42) an die Armatur (10) angespritzt ist.

10. Kraftfahrzeug, das ein Lenkrad nach einem der vorhergehenden Ansprüche aufweist.

## Claims

1. Vehicle steering wheel comprising:
- an armature (10) made of electrically conductive material,
- at least one position sensor and/or contact sensor (20) for sensing a limb of the user on the steering wheel,
- at least one decorative part (30),
- fastening means arranged to hold the decorative part (30) on the steering wheel,
- at least one anchoring part (42) arranged to anchor the fastening means onto the armature (10),
**characterized in that**:
the decorative part comprises an electrically conductive material, and
the anchoring part (42) is made of an electrically insulating material, so as to electrically insulate the fastening means from the armature (10).

2. Vehicle steering wheel according to the preceding claim, wherein the fastening means comprise a fastening screw and wherein the anchoring part (42) is arranged between the fastening screw and the armature (10).

3. Vehicle steering wheel according to either of the preceding claims, wherein the anchoring part (42) is a screw insert arranged to couple together with the fastening means.

4. Vehicle steering wheel according to any of the preceding claims, wherein the anchoring part (42) is fastened directly to the armature (10).

5. Vehicle steering wheel according to any of the preceding claims, wherein the conductive material of the decorative part (30) forms an outer surface of the steering wheel.

6. Vehicle steering wheel according to any of the preceding claims, wherein the decorative part (30) is adjacent to the position sensor.

7. Vehicle steering wheel according to any of the preceding claims, comprising a foam which at least partially covers the anchoring part (42).

8. Vehicle steering wheel according to any of the preceding claims, wherein the anchoring part (42) couples together with the fastening means.

9. Vehicle steering wheel according to any of the preceding claims, wherein the anchoring part (42) is overmolded onto the armature (10).

10. Motor vehicle including a steering wheel according to any of the preceding claims.
